# EUROPÄISCHE PATENTSCHRIFT

(11) **EP 3 901 574 B1**
(45) Veröffentlichungstag und Bekanntmachung des Hinweises auf die Patenterteilung: **31.05.2023**
(21) Anmeldenummer: 20170624.9
(22) Anmeldetag: 21.04.2020
(51) Int. Cl.: G01B 21/04, G05B 19/401

(54) **VERFAHREN UND VORRICHTUNG ZUR BESTIMMUNG VON MESSPUNKTEN EINER ANGEPASSTEN MESSBAHN ZUR VERMESSUNG EINES MESSOBJEKTS DURCH EINE KOORDINATENMESSEINRICHTUNG SOWIE PROGRAMM**
METHOD AND DEVICE FOR DETERMINING MEASURING POINTS OF AN ADAPTED MEASURING PATH FOR MEASURING A MEASURING OBJECT BY A COORDINATE MEASURING DEVICE AND PROGRAM
PROCÉDÉ ET DISPOSITIF DE DÉTERMINATION DES POINTS DE MESURE D'UNE BANDE DE MESURE ADAPTÉE À LA MESURE D'UN OBJET DE MESURE AU MOYEN D'UN DISPOSITIF DE MESURE DE COORDONNÉS AINSI QUE PROGRAMME

(43) Veröffentlichungstag der Anmeldung: 27.10.2021
(60) Teilanmeldung: 23169209.6
(73) Patentinhaber: Carl Zeiss Industrielle Messtechnik GmbH, 73447 Oberkochen (DE)
(72) Erfinder: Haas, Günter, 73432 Aalen (DE); Häring, Rolf, 89537 Giengen (DE); Keller, Jürgen, 73434 Aalen (DE); Wirnsberger, Christian-Alexander, 89551 Königsbronn (DE)
(74) Vertreter: Patentanwälte Bressel und Partner mbB

(56) Entgegenhaltungen:
- WO-A1-2018/060693
- US-A1- 2016 341 533
- US-A1- 2019 316 893

## Beschreibung

Die Erfindung betrifft ein Verfahren und eine Vorrichtung zur Bestimmung von Messpunkten einer angepassten Messbahn zur Vermessung eines Messobjekts durch eine Koordinatenmesseinrichtung sowie ein Programm.

Koordinatenmessgeräte sind im Stand der Technik allgemein bekannt. Sie dienen dazu, beispielsweise im Rahmen der Qualitätsprüfung, Werkstücke zu prüfen oder die Geometrie eines Werkstücks zu ermitteln. Darüber hinaus sind vielfältige weitere Anwendungsmöglichkeiten denkbar.

Für die Vermessung eines Messobjekts wird ein Sensor eines Koordinatenmessgeräts entlang einer Messbahn bewegt, wobei an Punkten der Messbahn Messwerte erzeugt werden, die dann die Koordinate eines Punktes oder Abschnitts des Messobjekts repräsentieren. Die Messbahn wird häufig anhand von idealen Geometriedaten des Messobjekts bestimmt. Weicht die Geometrie des realen Messobjekts jedoch von dieser idealen Geometrie ab, z.B. aufgrund einer Verformung wie einer Verbiegung des Messobjekts, so kann es passieren, dass das Messobjekt bzw. der zu vermessende Abschnitt des Messobjekts nicht mehr im Erfassungsbereich des Sensors liegt oder sich aus dem Erfassungsbereich des Sensors herausbewegt, wenn dieser entlang der Messbahn bewegt wird. Beispielsweise kann ein taktiler Sensor keinen Kontakt mehr zum Messobjekt haben oder diesen Kontakt verlieren. Bei einem optischen Sensor kann das Messobjekt nicht im Erfassungsbereich des Sensors angeordnet sein oder sich aus diesem herausbewegen. Dieses Risiko ist z.B. bei einer Vermessung einer Kante des Messobjekts hoch. In einem solchen Fall kann das Messobjekt nicht mehr zuverlässig vermessen werden.

Daher existieren Ansätze zur Bestimmung einer angepassten bzw. korrigierten Messbahn.

Die DE10 2016 120 557 A1 offenbart ein System zum dimensionalen Messen eines Objekts, mit einem optischen 3-D Sensor mit flächenhafter Antastung zur Erfassung von ersten dreidimensionalen Daten des Objekts, und mit einem Koordinatenmessgerät mit einem optischen und/oder taktilen Sensor zum dreidimensionalen Abtasten des Objekts. Das System weist auf:
- einen optischen 3-D Sensor mit flächenhafter Antastung zur Erfassung von ersten dreidimensionalen Daten des Objekts;
- ein Koordinatenmessgerät mit einem optischen und/oder taktilen Sensor zum dreidimensionalen Abtasten des Objekts;
- eine Speichereinheit zum Abspeichern einer anhand einer Sollkontur des Objekts bestimmten Sollmessbahn, entlang der der optische und/oder taktile Sensor des Koordinatenmessgeräts zum Abtasten des Objekts verfahren werden soll; und
- eine Auswerte- und Steuereinheit, welche dazu eingerichtet ist, anhand der durch den optischen 3-D Sensor mit flächenhafter Antastung erfassten ersten dreidimensionalen Daten und der in der Speichereinheit abgespeicherten Sollmessbahn eine korrigierte Messbahn zu bestimmen und den optischen und/oder taktilen Sensor des Koordinatenmessgeräts zur Erfassung von zweiten dreidimensionalen Daten des Objekts entlang der korrigierten Messbahn zu verfahren. Das in der DE 10 2016 120 557 A1 beschriebene System benötigt hierbei einen optischen 3-D Sensor mit flächenhafter Antastung, um die korrigierte Messbahn zu bestimmen. Dies erhöht Herstellungskosten und einen Bauraumbedarf des Systems.

Es stellt sich das technische Problem, ein Verfahren und eine Vorrichtung zur Bestimmung von Messpunkten einer angepassten Messbahn zur Vermessung eines Messobjekts durch eine Koordinatenmesseinrichtung sowie ein Programm zu schaffen, die die erläuterten Nachteile vermeiden, insbesondere also die Bestimmung einer korrigierten Messbahn mit reduzierter Anzahl an benötigten Komponenten und somit auch mit reduzierten Herstellungskosten und reduziertem Bauraumbedarf zu schaffen.

Die US 2016/341533 A1 offenbart ein Verfahren zum Steuern einer Formmessvorrichtung.

Die US 2019/316893 A1 offenbart Koordinatenmessmaschinen und insbesondere den Betrieb von Koordinatenmessmaschinen.

Die WO 2018/060693 A1 offenbart ein Verfahren und eine Vorrichtung zum Vermessen eines Objekts, insbesondere eine Technik zum Vermessen eines Offset eines Objekts unter Verwendung eines scannenden Sensors, der von einem Maschinenwerkzeug getragen wird.

Die Lösung des technischen Problems ergibt sich durch die Gegenstände mit den Merkmalen der unabhängigen Ansprüche. Weitere vorteilhafte Ausgestaltungen der Erfindung ergeben sich aus den Unteransprüchen.

Vorgeschlagen wird ein Verfahren zur Bestimmung von Messpunkten einer angepassten Messbahn. Die Messbahn dient zur Vermessung eines Messobjekts durch eine Koordinatenmesseinrichtung. Ein Messpunkt bezeichnet hierbei einen Punkt des Messobjekts, insbesondere einen Oberflächenpunkt.

In Abhängigkeit des Messpunkt kann eine messpunktspezifische Sensorpose bestimmt werden, wobei die messpunktspezifische Sensorpose eine Position und/oder eine Orientierung eines Sensors der Koordinatenmesseinrichtung bezeichnet, wobei eine Koordinatenmessung des Messpunkts durchgeführt wird, wenn sich der Sensor an der Position befindet und/oder die Orientierung aufweist. Somit kann in Abhängigkeit der Messbahn also eine Sensorbahn oder -trajektorie bestimmt werden.

Die Position und Orientierung können sich hierbei auf ein Referenzkoordinatensystem, beispielsweise ein Koordinatensystem der Koordinatenmesseinrichtung, beziehen. Die Vermessung des Messobjekts durch die Koordinatenmesseinrichtung wird durchgeführt, indem der Sensor entlang messpunktspezifischer Sensorposen, bewegt wird und dann eine Koordinatenmessung zur Erfassung der Messpunkte, also zur Erfassung von Koordinateninformationen, durchgeführt wird. Hierbei kann die Koordinatenmesseinrichtung, insbesondere bewegliche Teile der Koordinatenmesseinrichtung, derart angesteuert werden, dass der Sensor entlang der entsprechenden Sensorbahn bewegt wird.

Das Koordinatenmessgerät kann z.B. ein Koordinatenmessgerät in Ständer- oder Portalbauweise sein.

In Koordinatenmessgeräten können verschiedene Arten von Sensoren zur Anwendung kommen, um die Koordinaten des zu vermessenden Objekts zu erfassen. Der Sensor des Koordinatenmessgeräts kann z.B. ein taktil messender Sensor sein, wie er von der Anmelderin unter der Produktbezeichnung "VAST XT" oder "VAST XXT" vertrieben wird. Hierbei wird die Oberfläche des zu vermessenden Objekts mit einem Taststift abgetastet, dessen Koordinaten im Messraum ständig bekannt sind. Ein derartiger Taststift kann auch entlang der Oberfläche eines Objekts bewegt werden, so dass in einem solchen Messvorgang im Rahmen eines sogenannten "Scanning-Verfahrens" eine Vielzahl von Koordinaten des Messobjekts in festgelegten zeitlichen Abständen erfasst werden können. Auch können optische Sensoren eingesetzt werden, die ein berührungsloses Erfassen der Koordinaten eines Objekts ermöglichen. Ein Beispiel für einen derartigen optischen Sensor ist der unter der Produktbezeichnung "LineScan" von der Anmelderin vertriebene optische Sensor. Bei den optischen Sensoren handelt es sich wie auch bei den taktilen Sensoren vorwiegend um Punkt- oder Liniensensoren, die im Stillstand einen Punkt bzw. eine Linie erfassen. Kamerasensoren wie der von der Anmelderin vertriebene optische Sensor "ViScan" erfassen im Stillstand ein Bild. Für eine umfassende Bestimmung der Objektgeometrie werden diese Sensoren mit Hilfe des Koordinatenmessgeräts entlang der Messbahn über die Objektoberfläche bewegt.

Das vorgeschlagene Verfahren umfasst das Bestimmen von Messpunkten einer idealen Messbahn, insbesondere als ersten Schritt des Verfahrens. Diese idealen Messpunkte sind Messpunkte, die der Sensor des Koordinatenmessgeräts in einer entsprechenden messpunktspezifischen Sensorpose zuverlässig erfassen kann, wenn das Messobjekt seine ideale Form, also die Soll-Form, aufweist. Insbesondere kann eine Erfassbarkeit eines idealen Messpunkts unter der Annahme der idealen Form des Messobjekts durch den Sensor in einer messpunktspezifischen Sensorpose angenommen werden, also z.B. eine Berührung des Messobjekts durch einen taktilen Sensor oder ein Zustand, in dem sich das Messobjekt im Erfassungsbereich eines optischen Sensors befindet. In einem derartigen erfassbaren Zustand kann durch den Sensor also der Messpunkt bzw. Koordinaten des Messpunkts zuverlässig erfasst werden.

Nachfolgend bezeichnet also ein erfassbarer Zustand einen Zustand, in dem ein Sensor der Koordinatenmesseinrichtung das Messobjekt, insbesondere Messpunkte des Messobjekts, zuverlässig erfassen und somit einen zuverlässigen Messwert erzeugen kann, z.B. ein taktiler Sensor das Messobjekt, insbesondere einen gewünschten Abschnitt des Messobjekts, berührt oder sich das Messobjekt, insbesondere ein gewünschter Abschnitt des Messobjekts, in einem Erfassungsbereich eines optischen Sensors befindet. Ein nicht erfassbarer Zustand bezeichnet einen Zustand, in dem ein Sensor der Koordinatenmesseinrichtung das Messobjekt, insbesondere Messpunkte des Messobjekts, nicht oder nicht mehr zuverlässig erfassen und somit keinen zuverlässigen Messwert erzeugen kann, z.B. ein taktiler Sensor das Messobjekt nicht berührt oder sich das Messobjekt, insbesondere ein gewünschter Abschnitt des Messobjekts, nicht in einem Erfassungsbereich eines optischen Sensors befindet.

Die Messpunkte der idealen Messbahn können insbesondere in Abhängigkeit von vorbekannten Geometriedaten des Messobjekts, insbesondere in Abhängigkeit von CAD-Daten, bestimmt werden. Beispielsweise kann ein Nutzer oder ein automatisches Verfahren eine Messbahn auf Grundlage der vorbekannten Geometriedaten festlegen.

Diese Messbahn kann hierbei in einem Koordinatensystem der Geometriedaten bestimmt werden, wobei dann eine Transformation in das Koordinatensystem der Koordinatenmesseinrichtung notwendig ist. Um eine solche Transformation zu bestimmen, kann ein dem Fachmann bekannter Einmessvorgang durchgeführt werden, durch den eine Lage des Messobjekts im Messraum der Koordinatenmesseinrichtung bestimmt wird. Ist diese Lage bekannt, so kann eine Transformation vom Koordinatensystem der Geometriedaten in das Koordinatensystem der Koordinatenmesseinrichtung bestimmt und mit dieser Transformation dann die Messpunkte der Messbahn in diesem Koordinatensystem bestimmt werden.

Es ist auch möglich, dass Messpunkte der idealen Messbahn bestimmt werden, indem das Messobjekt vermessen wird, insbesondere durch die Koordinatenmesseinrichtung oder eine von der Koordinatenmesseinrichtung zur Vermessung mit der angepassten Messbahn verschiedenen, weiteren Koordinatenmesseinrichtung, wobei durch die Vermessung Geometriedaten des Messobjekts bestimmt und die Messpunkte dann in Abhängigkeit/auf Grundlage dieser Geometriedaten bestimmt werden. Für die Vermessung zur Bestimmung der Geometriedaten für die Bestimmung der Messpunkte der idealen Messbahn kann ein taktiler, vorzugweise ein optischer Sensor, besonders bevorzugt ein optischer 3-D Sensor mit flächenhafter Antastung, verwendet werden, wobei der optische 3-D Sensor eine die Oberfläche des Messobjekts repräsentierende dreidimensionale Punktewolke erzeugen kann. Ein solcher Sensor kann ein Streifenprojektionssensor sein, der in der eingangs erläuterten DE 10 2016 120 557 A1 beschrieben ist. Hierbei kann der Sensor, der zur Vermessung zur Bestimmung der Geometriedaten für die Bestimmung der Messpunkte der idealen Messbahn genutzt wird, vom dem Sensor verschieden sein, durch den die Vermessung mit der wie vorgeschlagen zu bestimmenden angepassten Messbahn durchgeführt wird.

Weiter erfolgt ein Bestimmen von Soll-Messpunkten mindestens einer Führungsbahn, die von der idealen Messbahn verschieden ist, insbesondere in einem zweiten Schritt des vorgeschlagenen Verfahrens. Die Soll-Messpunkte der Führungsbahn können - wie vorhergehend mit Bezug zu den Messpunkten der idealen Messbahn - in Abhängigkeit von vorbekannten Geometriedaten des Messobjekts oder in Abhängigkeit von Geometriedaten des Messobjekts bestimmt werden, die durch eine Vermessung durch die Koordinatenmesseinrichtung oder eine weitere Koordinatenmesseinrichtung bestimmt werden.

Insbesondere können die Soll-Messpunkte der Führungsbahn derart bestimmt werden, dass durch den Sensor der Koordinatenmesseinrichtung Koordinatenmessungen in oder entlang eines Abschnitts des Messobjekts durchgeführt werden, der von dem durch die ideale Messbahn zu vermessenden Abschnitt verschieden ist. Der durch Soll-Messpunkte zu vermessende Abschnitt des Messobjekts kann insbesondere derart gewählt werden, dass ein Risiko des Auftretens eines nicht erfassbaren Zustands im Vergleich zu einer Vermessung entlang der idealen Messbahn reduziert wird.

Die Soll-Messpunkte der Führungsbahn können insbesondere derart gewählt werden, dass ein Maximalwert der Menge von minimalen Abständen zwischen Soll-Messpunkten der Führungsbahn und der idealen Messbahn kleiner als ein vorbestimmter Wert ist. Dieser Wert kann anwendungsabhängig gewählt werden und z.B. in einem Bereich von 0.1 mm bis 10.0 mm liegen.

Die Anzahl der Soll-Messpunkte der Führungsbahn kann gleich der Anzahl der Messpunkte der idealen Messbahn sein. Allerdings kann ein Verhältnis zwischen der Anzahl der Soll-Messpunkte der Führungsbahn und der Anzahl der Messpunkte der idealen Messbahn auch anwendungsabhängig gewählt werden und insbesondere zwischen 0.1 (einschließlich) und 1.0 (einschließlich) liegen oder auch höher sein.

Weiter erfolgt ein Erfassen von Ist-Messpunkten entlang der mindestens einen Führungsbahn durch die Koordinatenmesseinrichtung oder durch eine weitere Koordinatenmesseinrichtung, insbesondere in einem dritten Schritt des vorgeschlagenen Verfahrens. Insbesondere wird hierzu der Sensor entlang der messpunktspezifischen Sensorposen bewegt, die in Abhängigkeit der Messpunkte der Führungsbahn bestimmt wurden. Weiter wird dann in allen oder ausgewählten Sensorposen dieser Sensorbahn jeweils ein Ist-Messpunkt erfasst, insbesondere Koordinaten eines solchen Ist-Messpunkts.

Weiter erfolgt ein Bestimmen der Abweichungen zwischen den Soll-Messpunkten und den Ist-Messpunkten der mindestens einen Führungsbahn, insbesondere in einem vierten Schritt des vorgeschlagenen Verfahrens. Die Abweichung kann insbesondere in Form eines Abstands zwischen dem Soll-Messpunkt und dem in der soll-messpunktspezifischen Sensorpose erfassten Ist-Messpunkts bestimmt werden, weiter insbesondere als Differenz zwischen den Koordinatenwerten dieser Messpunkte.

Weiter erfolgt ein Bestimmen der Messpunkte der angepassten Messbahn, die auch als angepasste Messpunkte bezeichnet werden können, durch Verändern der Messpunkte der idealen Messbahn in Abhängigkeit der Abweichungen, insbesondere in einem fünften Schritt des vorgeschlagenen Verfahrens. Insbesondere kann für jeden oder ausgewählte ideale(n) Messpunkt(e) jeweils ein angepasster Messpunkt derart bestimmt werden, dass der Abstand zum korrespondierenden idealen Messpunkt, insbesondere die Differenz zwischen den Koordinatenwerten der Messpunkte, dem Abstand zwischen einem Soll-Messpunkt der Führungsbahn, der dem idealen Messpunkt zugeordnet ist, und dem in der soll-messpunktspezifischen Sensorpose erfassten Ist-Messpunkt, insbesondere der Differenz zwischen den Koordinatenwerten dieser Messpunkte, entspricht.

Hierfür kann jedem Messpunkt der idealen Messbahn ein Soll-Messpunkt der Führungsbahn zugeordnet werden. Beispielweise kann der Soll-Messpunkt der Führungsbahn, der den geringsten Abstand aller Messpunkte der Führungsbahn zu dem Messpunkt der idealen Messbahn aufweist, der diesem zugeordnete Messpunkt sein. Zur Bestimmung eines solchen Punktes der Führungsbahn kann auch eine Interpolation in Abhängigkeit der Soll-Messpunkte der Führungsbahn durchgeführt werden, beispielsweise eine Spline-Interpolation. Dies kann insbesondere dann erfolgen, wenn eine Anzahl der Soll-Messpunkte der Führungsbahn von der Anzahl der Punkte der idealen Messbahn verschieden ist.

Weiter kann auch für jeden oder ausgewählte angepasste Messpunkte jeweils eine angepasste Sensorpose und somit auch eine angepasste Sensorbahn bestimmt werden. Diese angepasste Sensorbahn kann dann zur Vermessung des Messobjekts genutzt werden. Insbesondere kann die Koordinatenmesseinrichtung derart gesteuert werden, dass der Sensor entlang der angepassten Sensorbahn bewegt wird und entlang dieser Messpunkte erfasst.

Hierdurch ergibt sich in vorteilhafter Weise ein Verfahren zur Bestimmung von Messpunkten einer angepassten Messbahn, welches das Risiko des Eintretens eines nicht erfassbaren Zustands des Messobjekts, insbesondere eines gewünschten Abschnitts des Messobjekts, zuverlässig reduziert, wobei gleichzeitig die Anzahl der hierzu benötigten Komponenten und somit auch Herstellungskosten und ein Bauraumbedarf einer zur Durchführung des Verfahrens geeigneten Vorrichtung reduziert werden.

In einer weiteren Ausführungsform verläuft die Messbahn entlang einer Kante des Messobjekts. Hierbei kann die ideale Messbahn insbesondere entlang der Kante des Messobjekts verlaufen. Bei Kanten ergibt sich ein besonders hohes Risiko eines nicht erfassbaren Zustands, insbesondere wenn die tatsächliche Geometrie des Messobjekts, z.B. aufgrund von Verbiegungen oder Verformungen, von der idealen Geometrie abweicht. Somit ergibt sich in vorteilhafter Weise ein Verfahren zur Bestimmung einer Messbahn zur Erfassung der Lage einer Kante des Messobjekts, welches das erhöhte Risiko des Eintretens eines nicht erfassbaren Zustands der Kante reduziert.

Erfindungsgemäß verläuft die mindestens eine Führungsbahn parallel zur idealen Messbahn. Hierdurch ergibt sich in vorteilhafter Weise eine einfache Bestimmung der Soll-Messpunkte der Führungsbahn, die den Messpunkten der idealen Messbahn zugeordnet sind. Insbesondere kann der einem ausgewählten Messpunkt der idealen Messbahn zugeordnete Messpunkt als Schnittpunkt einer Verbindungslinie zwischen Führungsbahn und idealer Messbahn bestimmt werden, wobei die Verbindungslinie den ausgewählten Messpunkt auf der idealen Messbahn schneidet und senkrecht zur idealen Messbahn orientiert ist. Weiter erhöht sich in vorteilhafter Weise die Zuverlässigkeit der

Vermeidung von nicht erfassbaren Zuständen, insbesondere bei der Vermessung einer Kante, da für eine Vielzahl von Messobjekten angenommen werden kann, dass sich Abweichungen zwischen Soll-Position und Ist-Position von Messpunkten bei parallelen Messbahnen, die nicht mehr als ein vorbestimmtes Maß voneinander entfernt sind, nicht maßgeblich ändert.

In einer weiteren Ausführungsform verläuft die Führungsbahn entlang einer Fläche des Messobjekts. Eine Fläche kann hierbei ein Bereich des Messobjekts sein, in dem keine unstetige Änderung der Orientierung des Normalenvektors der Oberfläche des Messobjekts auftritt. Die Fläche kann insbesondere eine ungekrümmte Fläche sein. Dies ist aber nicht zwingend. So ist auch vorstellbar, dass die Fläche eine gekrümmte Fläche ist. Allerdings umfasst die Fläche keine Kante oder Ecke. Hierdurch erhöht sich in vorteilhafter Weise die Zuverlässigkeit der Erfassung von Ist-Messpunkten, da das Risiko von nicht erfassbaren Zuständen bei Messbahnen entlang von Flächen geringer ist als bei z.B. Messbahnen entlang von Kanten. Somit erhöht sich in vorteilhafter Weise auch die Zuverlässigkeit der Bestimmung der Messpunkte der angepassten Messbahn.

In einer weiteren Ausführungsform verläuft die ideale Messbahn entlang einer Kante des Messobjekts, wobei die Fläche eine durch die Kante begrenzte Fläche ist. Mit anderen Worten ist die Fläche eine der Kante benachbarte bzw. eine mit der Kante abschließende Fläche. Es kann angenommen werden, dass bei Verformungen des Messobjekts die Auswirkungen auf den Kantenverlauf ähnlich oder gleich der Auswirkungen auf den Flächenverlauf sind. Somit wird die Zuverlässigkeit der Vermeidung von nicht erfassbaren Zuständen bei der Vermessung einer Kante erhöht, da angenommen werden kann, dass Abweichungen zwischen Soll-Position und Ist-Position von Messpunkten entlang der Führungsbahn gleich der Abweichung zwischen Soll-Position und Ist-Position von Messpunkten entlang der idealen Messbahn sind.

In einer weiteren Ausführungsform ist ein Maximalwert der Abstände zwischen einem Soll-Messpunkt der Führungsbahn und dem nächstliegenden Messpunkt der idealen Messbahn kleiner als ein vorbestimmter Abstand. Dies wurde vorhergehend erläutert. Durch die räumliche Nähe zwischen Führungsbahn und idealer Messbahn erhöht sich in vorteilhafter Weise die Wahrscheinlichkeit, dass die Auswirkung von Verformungen des Messobjekts auf den Verlauf der idealen Messbahn ähnlich oder gleich der Auswirkungen auf den Verlauf der Soll-Führungsbahn sind, entlang derer dann diese Auswirkungen durch die Bestimmung der Abweichungen zwischen Soll-Position und Ist-Position der Messpunkte quantifiziert werden. Wird diese Auswirkung dann, wie vorhergehend erläutert, auf den Verlauf der idealen Messbahn übertragen, um den tatsächlichen Verlauf der idealen Messbahn zu bestimmen, so ergibt sich in vorteilhafter Weise eine hohe Zuverlässigkeit der Vermeidung von nicht erfassbaren Zuständen bei der Vermessung entlang der angepassten Messbahn.

In einer weiteren Ausführungsform ist eine Orientierung des Sensors zur Erfassung mindestens eines Ist-Messpunkts der Führungsbahn von einer Orientierung des Sensors zur Erfassung mindestens eines Messpunkts der idealen Messbahn verschieden.

Hierzu kann nach der Bestimmung der Messpunkte der idealen Messbahn wie vorhergehend erläutert auch die messpunktspezifische Orientierung des Sensors bestimmt werden mit der der entsprechende Messpunkt erfasst wird/werden soll. Weiter kann nach der Bestimmung der Soll-Messpunkte der Führungsbahn wie vorhergehend erläutert auch die messpunktspezifische Orientierung des Sensors bestimmt werden mit der der entsprechende Messpunkt erfasst wird/werden soll, wobei diese Orientierung von der vorher bestimmten Orientierung des Sensors zur Erfassung der Messpunkte der idealen Messbahn verschieden ist. Es ist weiter möglich, dass die Orientierung des Sensors zur Erfassung mindestens eines Messpunkts der angepassten Messbahn von einer Orientierung des Sensors zur Erfassung mindestens eines Soll-Messpunkts der Führungsbahn verschieden ist. Hierzu kann nach Bestimmung der Messpunkte der angepassten Messbahn für jeden dieser Messpunkte eine messpunktspezifische Orientierung des Sensors bestimmt werden, die verschieden von der Orientierung des Sensors zur Erfassung der jeweils zugeordneten Soll-Messpunkte der Führungsbahn ist. Auch kann die Orientierung des Sensors zur Erfassung mindestens eines Messpunkts der angepassten Messbahn gleich der Orientierung des Sensors zur Erfassung mindestens eines Messpunkts der idealen Messbahn sein.

Es ist möglich, dass für alle Messpunkte der Führungsbahn die gleiche Orientierung des Sensors für deren Erfassung bestimmt wird. Auch kann eine gleiche Orientierung des Sensors zur Erfassung aller Messpunkte der idealen Messbahn als auch eine gleiche Orientierung des Sensors zur Erfassung aller Messpunkte der angepassten Messbahn bestimmt werden. Es ist allerdings auch möglich, dass für verschiedene Messpunkte der Führungsbahn verschiedene Orientierungen des Sensors und/oder für verschiedene Messpunkte der idealen Messbahn verschiedene Orientierungen des Sensors und/oder für verschiedene Messpunkte der angepassten Messbahn verschiedene Orientierungen des Sensors bestimmt werden. In diesem Fall können die Orientierungen des Sensors zur Erfassung von einander zugeordneten Messpunkten der idealen Messbahn und der Führungsbahn als voneinander verschiedene Orientierungen bestimmt werden, wobei einem Messpunkt der idealen Messbahn z.B. der Schnittpunkt einer Verbindungslinie mit der Führungsbahn als zugeordneter Messpunkt der Führungsbahn zugeordnet wird, wobei die Verbindungslinie die ideale Messbahn im Messpunkt schneidet und senkrecht zur Messbahn orientiert ist. Entsprechendes gilt für die Zuordnung von Messpunkten der idealen Messbahn zu Messpunkten der angepassten Messbahn.

Die Einstellung verschiedener Orientierungen ermöglicht hierbei in vorteilhafter Weise, dass eine besonders zuverlässige Erfassung von Messpunkten entlang der Führungsbahn ermöglicht werden kann. Insbesondere kann die Orientierung des Sensors zur Erfassung der Messpunkte der Führungsbahn parallel zu einer Orientierung eines Oberflächennormalenvektors des Messobjekts im Messpunkt gewählt werden. Dies ist insbesondere vorteilhaft für die Bestimmung von Messpunkten entlang einer Kante, da in diesem Fall die Orientierung des Sensors zur Bestimmung der Ist-Messpunkte entlang der Führungsbahn an die Orientierung einer Oberflächennormalen einer von der Kante begrenzten Fläche angepasst werden kann.

Auch wird durch die Einstellung unterschiedlicher Orientierungen ermöglicht, dass ein Sensor derart ausgerichtet werden kann, dass eine Genauigkeit eines Sensors bei Bestimmung von Abweichungen maximiert wird. Liegen z.B. die Soll-Messpunkte der Führungsbahn in einer Ebene und sollen z.B. Abweichungen parallel zu einer Normalen dieser Ebene bestimmt werden, so kann die Orientierung eines taktilen Sensors mit einem Taststift beispielsweise derart eingestellt werden, dass eine Längsachse des Taststifts in einem unausgelenkten Zustand ebenfalls parallel zur Normalen ist, da ein solcher taktiler Sensor solche Auslenkungen entlang der Längsachse in der Regel sehr genau detektieren kann. Ist der Sensor jedoch ein optischer Sensor, so kann die Orientierung des optischen Sensors beispielsweise derart eingestellt werden, dass die optische Achse des Sensors rechtwinklig zur Normalen orientiert ist, da ein solcher optischer Sensor in der Regel eine hohe Auflösung und somit Genauigkeit bei der Bestimmung von Abweichungen in Richtungen senkrecht zur optischen Achse aufweist.

Durch diese Anpassung kann auch eine unerwünschte Auswirkung einer Tasterdurchbiegung auf ein Messergebnis verringert werden.

In einer weiteren Ausführungsform sind die Orientierungen um 90° verschieden. Hierdurch ergibt sich in vorteilhafter Weise eine besonders gute Anpassung an einen taktilen Sensor, der verschiedene Taststifte mit daran angeordneten Tastkugeln zum Antasten einer Oberfläche des Messobjekts umfasst, wobei die Orientierungen der Längsachsen der Taststifte um 90° voneinander verschieden sind.

Neben den vorhergehend genannten Vorteilen ergibt sich in weiter vorteilhafter Weise, dass ein Kantenverlauf zuverlässig erfasst werden kann, wobei die Kante von zwei rechtwinklig oder im Wesentlichen rechtwinklig zueinander orientierter Flächen gebildet wird. Z.B. kann somit der Kantenverlauf einer Kante vermessen werden, die von einer inneren Mantelfläche oder einer äußeren Mantelfläche eines (hohl)zylinderförmigen Prüfelements und einer hierzu senkrecht orientierten Stirnfläche dieses Prüfelements gebildet wird.

In einer weiteren Ausführungsform werden die Messpunkte der idealen Messbahn und die Soll-Messpunkten der Führungsbahn modellbasiert, insbesondere CAD-modellbasiert bestimmt. Dies wurde vorhergehend bereits erläutert. Hierdurch ergibt sich in vorteilhafter Weise eine besonders einfache und zeitliche Bestimmung der Messpunkte der idealen Messbahn und somit auch eine zeitlich schnelle Bestimmung der Messpunkte der angepassten Messbahn.

In einer weiteren Ausführungsform werden für jedes zu vermessende Messobjekt zumindest folgende Schritte erneut durchgeführt:
- Erfassen von Ist-Messpunkten entlang der mindestens einen Führungsbahn durch die Koordinatenmesseinrichtung oder eine weitere Koordinatenmesseinrichtung,
- Bestimmen der Abweichungen zwischen den Soll-Messpunkten und den Ist-Messpunkten der mindestens einen Führungsbahn,
- Bestimmen der Messpunkte der angepassten Messbahn durch Verändern der Messpunkten der idealen Messbahn in Abhängigkeit der Abweichungen.

Selbstverständlich ist es zusätzlich möglich, dass auch das Bestimmen von Messpunkten einer idealen Messbahn und das Bestimmen von Soll-Messpunkten mindestens einer Führungsbahn, die von der idealen Messbahn verschieden ist, für jedes neue Messobjekt erneut durchgeführt wird. Hierfür kann eine vorher bestimmte angepasste Messbahn vor der Bestimmung der angepassten Messbahn für ein neues Messobjekt zurückgesetzt werden, insbesondere auf die ideale Messbahn oder eine weitere ideale Messbahn. Hierdurch ergibt sich in vorteilhafter Weise, dass das Risiko des Eintretens eines nicht erfassbaren Zustands des Messobjekts, insbesondere eines gewünschten Abschnitts des Messobjekts, messobjektspezifisch zuverlässig reduziert werden kann.

Weiter vorgeschlagen wird ein Programm, welches, wenn es auf oder durch einen Computer oder eine Auswerteeinrichtung ausgeführt wird, den Computer bzw. die Auswerteeinrichtung veranlasst, einen, mehrere oder alle Schritte des in dieser Offenbarung dargestellten Verfahrens zur Bestimmung von Messpunkten einer angepassten Messbahn durchzuführen. Insbesondere kann das Programm die entsprechenden Bestimmungsschritte und Ermittlungsschritte durchführen. Auch kann das Programm eine Koordinatenmesseinrichtung ansteuern, um die Ist-Messpunkte der Führungsbahn zu erfassen.

Alternativ oder kumulativ wird ein Programmspeichermedium oder Computerprogrammprodukt beschrieben, auf oder in dem das Programm gespeichert ist, insbesondere in einer nicht vorübergehenden, z.B. in einer dauerhaften, Form. Alternativ oder kumulativ wird ein Computer beschrieben, der dieses Programmspeichermedium umfasst. Weiter alternativ oder kumulativ wird ein Signal beschrieben, beispielsweise ein digitales Signal, welches Informationen codiert, die das Programm repräsentieren und welches Code-Mittel umfasst, die adaptiert sind, einen, mehrere oder alle Schritte des in dieser Offenbarung dargestellten Verfahrens zur Bestimmung von Messpunkten einer angepassten Messbahn zur Vermessung eines Messobjekts durch eine Koordinatenmesseinrichtung durchzuführen. Das Signal kann ein physikalisches Signal, z.B. ein elektrisches Signal, sein, welches insbesondere technisch oder maschinell erzeugt wird. Das Programm kann den Computer auch dazu veranlassen, Messpunkte entlang der angepassten Messbahn zu erzeugen.

Weiter kann das Verfahren zur Bestimmung von Messpunkten einer angepassten Messbahn ein computerimplementiertes Verfahren sein. So können zum Beispiel ein, mehrere oder alle Schritte des Verfahrens durch einen Computer ausgeführt werden. Eine Ausführungsform für das computerimplementierte Verfahren ist die Benutzung des Computers zur Durchführung einer Datenverarbeitungsmethode. Der Computer kann z.B. zumindest eine Recheneinrichtung, insbesondere einen Prozessor, und zum Beispiel zumindest eine Speichereinrichtung umfassen, um die Daten, insbesondere technisch, zu verarbeiten, z.B. elektronisch und/oder optisch. Ein Computer kann hierbei jede Art von Datenverarbeitungsgerät sein. Ein Prozessor kann ein halbleiterbasierter Prozessor sein. Weiter kann das Programm den Computer auch dazu veranlassen, die Erfassung von Ist-Messpunkten entlang der mindestens einen Führungsbahn durch die Koordinatenmesseinrichtung oder eine weitere Koordinatenmesseinrichtung auszuführen. In diesem Fall kann also das Programm zur Steuerung der Koordinatenmesseinrichtung oder einer weiteren Koordinatenmesseinrichtung dienen.

Hierdurch ergibt sich in vorteilhafter Weise ein Programm zur Durchführung des vorgeschlagenen Verfahrens mit den entsprechenden und bereits erläuterten technischen Vorteilen.

Weiter vorgeschlagen wird eine Vorrichtung zur Bestimmung von Messpunkten einer angepassten Messbahn zur Vermessung eines Messobjekts durch eine Koordinatenmesseinrichtung, wobei die Vorrichtung die Koordinatenmesseinrichtung oder eine weitere Koordinatenmesseinrichtung sowie mindestens eine Steuer- und Auswerteeinrichtung umfasst. Die Steuer- und Auswerteeinrichtung kann insbesondere eine Recheneinrichtung sein. Dies wurde vorhergehend bereits erläutert. Eine solche Recheneinrichtung kann insbesondere als Mikrocontroller oder integrierte Schaltung ausgebildet sein oder eine(n) solche(n) umfassen.

Die Vorrichtung ist konfiguriert, ein Verfahren gemäß einer der in dieser Offenbarung beschriebenen Ausführungsformen mit den entsprechenden technischen Vorteilen durchzuführen. Insbesondere ist die Vorrichtung also konfiguriert, ein Verfahren durchzuführen, welches folgende Schritte umfasst:
- Bestimmen von Messpunkten einer idealen Messbahn,
- Bestimmen von Soll-Messpunkten mindestens einer Führungsbahn, die von der idealen Messbahn verschieden ist,
- Erfassen von Ist-Messpunkten entlang der mindestens einen Führungsbahn durch die Koordinatenmesseinrichtung oder eine weitere Koordinatenmesseinrichtung,
- Bestimmen der Abweichungen zwischen den Soll-Messpunkten und den Ist-Messpunkten der mindestens einen Führungsbahn,
- Bestimmen der Messpunkte der angepassten Messbahn durch Verändern der Messpunkte der idealen Messbahn in Abhängigkeit der Abweichungen.

Weiter kann die Vorrichtung eine Eingabeeinrichtung zur Festlegung der Messpunkte der idealen Messbahn umfassen, z.B. durch einen Nutzer. Diese kann auch dazu dienen, eine Orientierung des Sensors zur Erfassung von Messpunkten der idealen Messbahn und/oder zur Erfassung von Soll-Messpunkten der Führungsbahn festzulegen.

Auch kann die Eingabeeinrichtung dazu dienen, die Soll-Messpunkte der Führungsbahn festzulegen. Weiter kann die Eingabeeinrichtung dazu dienen, für das Verfahren notwendige Parameter, beispielsweise einen maximal zulässigen Abstand zwischen den Messpunkten der idealen Messbahn und den Messpunkten der Führungsbahn, festzulegen.

Weiter kann die Vorrichtung eine Anzeigeeinrichtung zur Darstellung des Messobjekts, der idealen Messbahn, der Messpunkte der idealen Messbahn, der Orientierung eines Sensors zur Erfassung der Messpunkte der idealen Messbahn, der Führungsbahn, der Soll-Messpunkte der Führungsbahn und der Orientierung des Sensors zur Erfassung der Soll-Messpunkte umfassen.

Weiter beschrieben wird ein Verfahren zur Vermessung eines Messobjekts, wobei Messpunkte einer angepassten Messbahn zur Vermessung des Messobjekts durch eine Koordinatenmesseinrichtung gemäß einer der in dieser Offenbarung beschriebenen Ausführungsformen bestimmt werden, wobei dann die Koordinatenmesseinrichtung zur Erfassung der angepassten Messpunkte angesteuert wird und entsprechende Messwerte, z.B. durch einen Sensor, erzeugt werden.

Weiter beschrieben wird eine Koordinatenmesseinrichtung zur Vermessung eines Messobjekts, wobei die Koordinatenmesseinrichtung eine Vorrichtung zur Bestimmung von Messpunkten einer angepassten Messbahn zur Vermessung des Messobjekts durch die Koordinatenmesseinrichtung gemäß einer der in dieser Offenbarung beschriebenen Ausführungsformen umfasst, wobei dann die Koordinatenmesseinrichtung zur Erfassung der angepassten Messpunkte ansteuerbar und entsprechende Messwerte, z.B. durch einen Sensor, erzeugbar sind. Die Ansteuerung kann z.B. durch eine Steuereinrichtung der Koordinatenmesseinrichtung erfolgen.

Die Erfindung wird anhand von Ausführungsbeispielen näher erläutert. Die Figuren zeigen:
- Fig. 1: ein schematisches Blockschaltbild einer erfindungsgemäßen Vorrichtung,
- Fig. 2: ein schematisches Flussdiagramm eines erfindungsgemäßen Verfahrens,
- Fig. 3a: eine schematische Darstellung eines idealen Messobjekts mit einem exemplarischen Messpunkt einer idealen Messbahn,
- Fig. 3b: das in Fig. 3a dargestellte ideale Messobjekt mit einem verschobenen Messpunkt,
- Fig. 3c: das in Figur 3a dargestellte ideale Messobjekt mit einem Soll-Messpunkt einer Führungsbahn,
- Fig. 4a: eine schematische Darstellung eines realen Messobjekts mit einem Ist-Messpunkt entlang der Führungsbahn und
- Fig. 4b: eine schematische Darstellung des realen Messobjekts mit einem angepassten Messpunkt.

Nachfolgend bezeichnen gleiche Bezugszeichen Elemente mit gleichen oder ähnlichen technischen Merkmalen.

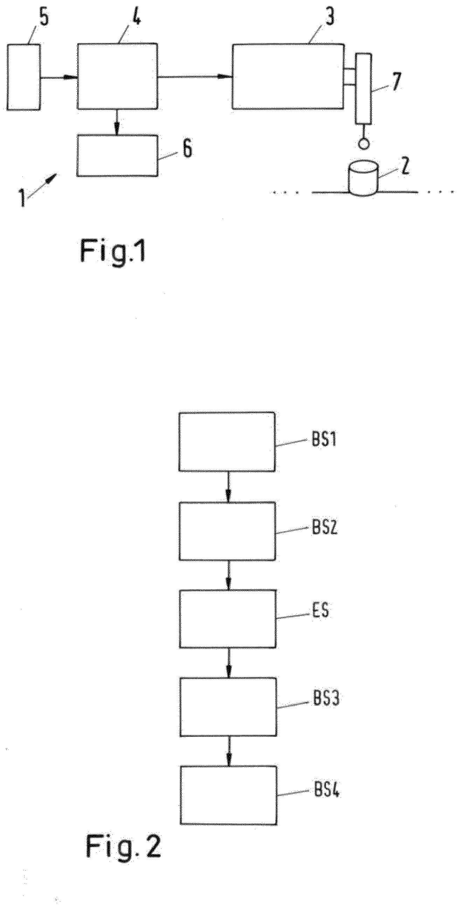

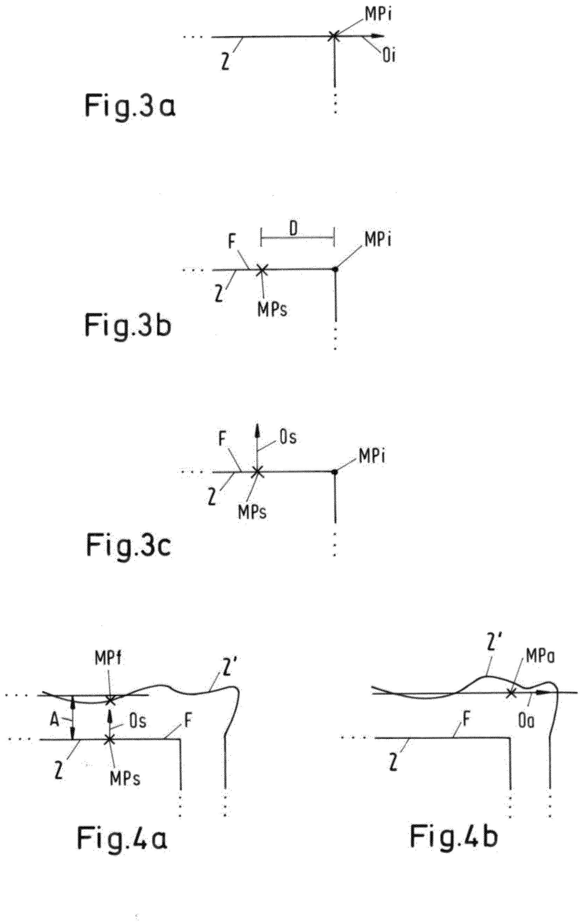

Fig. 1 zeigt ein schematisches Blockdiagramm einer erfindungsgemäßen Vorrichtung 1 zur Bestimmung von Messpunkten MPa (siehe Fig. 4b) einer angepassten Messbahn zur Vermessung eines Messobjekts 2 durch eine Koordinatenmesseinrichtung 3. Diese Vorrichtung 1 umfasst die Koordinatenmesseinrichtung 3 und eine Steuer- und Auswerteeinrichtung 4. Weiter umfasst die Vorrichtung 1 eine Eingabeeinrichtung 5 für eine Nutzereingabe sowie eine Anzeigeeinrichtung 6 zur Darstellung einer virtuellen Repräsentation des Messobjekts 2 sowie zur Darstellung von einer virtuellen Repräsentation von Messpunkten MPi der idealen Messbahn, Soll-Messpunkten MPs einer Führungsbahn sowie von Orientierungen eines taktilen Sensors 7, die zur Erfassung von Messpunkten MPs, MPf, MPa entlang der verschiedenen Bahnen eingestellt wird.

Diese Orientierungen zur Erfassung von Messpunkten MPi, MPs, MPa der idealen Messbahn, der Führungsbahn und der angepassten Messbahn können mittels der Eingabeeinrichtung 5 von einem Nutzer eingegeben werden.

Die dargestellte Vorrichtung 1 ist konfiguriert, das in Fig. 2 dargestellte Verfahren durchzuführen.

Fig. 2 zeigt ein schematisches Flussdiagramm eines erfindungsgemäßen Verfahrens zur Bestimmung von Messpunkten MPa einer angepassten Messbahn zur Vermessung eines Messobjekts 2 (siehe Fig. 1). Das Verfahren umfasst einen ersten Bestimmungsschritt BS1 zur Bestimmung von Messpunkten MPi einer idealen Messbahn. Diese können beispielsweise in einer virtuellen Umgebung bestimmt werden, beispielsweise durch einen Nutzer oder ein (teil-)automatisiertes Verfahren festgelegt werden.

In einem zweiten Bestimmungsschritt BS2 erfolgt die Bestimmung von Soll-Messpunkten MPs einer Führungsbahn, die von der idealen Messbahn verschieden ist. Auch diese Soll-Messpunkte MPs können durch einen Nutzer oder ein (teil-)automatisiertes Verfahren festgelegt werden. Weiter kann den Messpunkten eine Position und/oder Orientierung eines Sensors, z.B. des in Fig. 1 dargestellten taktilen Sensors 7, einer Koordinatenmesseinrichtung 3 zugeordnet werden. Hierzu kann beispielsweise eine gewünschte Orientierung eingestellt werden, beispielsweise durch einen Nutzer oder (teil-)automatisiert. Die Position des Sensors zur Erfassung des festgelegten Messpunkts MPi, MPs mit der vom Nutzer festgelegten Orientierung kann dann automatisiert bestimmt werden.

In einem Erfassungsschritt ES erfolgt ein Erfassen von Ist-Messpunkten MPf entlang der im zweiten Bestimmungsschritt BS2 festgelegten Führungsbahn durch die Koordinatenmesseinrichtung 3 oder eine (nicht dargestellt) weitere Koordinatenmesseinrichtung. In einem dritten Bestimmungsschritt BS3 erfolgt das Bestimmen der Abweichung A zwischen den Soll-Messpunkte MPs und den Ist-Messpunkten MPf der Führungsbahn (siehe Fig. 4a).

In einem vierten Bestimmungsschritt BS4 erfolgt dann das Bestimmen von angepassten Messpunkten MPa durch Verändern der Messpunkte MPi der idealen Messbahn in Abhängigkeit der Abweichungen A. Eine beispielhafte solche Änderung der Messpunkte MPi der idealen Messbahn wurde vorhergehend bereits erläutert.

Fig. 3a zeigt eine schematische Darstellung eines idealen Messobjekts 2, insbesondere eine Kante dieses idealen Messobjekts 2. Weiter dargestellt ist ein idealer Messpunkt MPi einer idealen Messbahn sowie eine Orientierung eines Sensors zur Erfassung dieses Messpunkts MPi, wobei die Orientierung durch einen Pfeil Oi repräsentiert ist. Ersichtlich ist, dass der Messpunkt MPi ein Punkt entlang/an einer Kante des Messobjekts 2 ist. Insbesondere kann also die ideale Messbahn entlang dieser Kante des Messobjekts 2 verlaufen, wobei neben dem dargestellten Messpunkt MPi auch noch weitere Messpunkte dieser idealen Messbahn entlang der Kante angeordnet sind.

Fig. 3b zeigt eine schematische Darstellung des idealen Messobjekts 2 mit einem um den Abstand D verschobenen Messpunkt MPs, der einen Soll-Messpunkt MPs einer Führungsbahn bildet, die von der idealen Messbahn verschieden ist und parallel zu dieser verläuft. Im dargestellten Ausführungsbeispiel ist dargestellt, dass die Messbahnen parallel zu einer Richtung orientiert sind, die senkrecht zur Zeichenebene orientiert ist. Weiter ist dargestellt, dass der Abstand D zwischen dem Messpunkt MPi der idealen Messbahn und dem Soll-Messpunkt MPs der Führungsbahn entlang einer Geraden gemessen ist, die senkrecht zur idealen Messbahn und entlang einer Fläche F des idealen Messobjekts 2 verläuft, wobei die Fläche F eine durch die Kante begrenzte Fläche ist. Hierbei kann der Abstand D derart gewählt sein, dass ein Maximalwert der Abstände D zwischen einem Soll-Messpunkt MPs der Führungsbahn und den jeweils nächstliegenden Messpunkt MPi der idealen Messbahn kleiner als ein vorbestimmter maximal zulässiger Abstand ist.

Fig. 3c zeigt eine schematische Darstellung des in Fig. 3b dargestellten Messobjekts 2, wobei zusätzlich eine Orientierung Os des Sensors zur Erfassung des Messpunkts MPs der Führungsbahn dargestellt ist. Ersichtlich ist, dass die Orientierung des Sensors zur Erfassung des Messpunkts MPi der idealen Messbahn von der Orientierung des Sensors zur Erfassung des Messpunkts MPs der Führungsbahn verschieden ist, wobei die Winkeldifferenz zwischen den Orientierungen 90° beträgt. Die Orientierung des Sensors zur Erfassung eines Messpunkts MPs der Führungsbahn kann insbesondere derart eingestellt werden, dass diese parallel zu einem Normalvektor der Oberfläche des idealen Messobjekts im Messpunkt MPs ist. Liegt der Messpunkt MPs auf einer ungekrümmten Fläche, die von der Kante begrenzt wird, so kann die Orientierung des Sensors zur Erfassung des Messpunkts MPs insbesondere derart eingestellt werden, dass diese parallel zu einem Normalvektor dieser ungekrümmten Fläche ist.

Fig. 4a zeigt eine schematische Darstellung eines realen Messobjekts 2` in Zusammenschau mit dem in Fig. 3C dargestellten idealen Messobjekt 2. Hierbei ist der Soll-Messpunkt MPs der Führungsbahn sowie die entsprechende Orientierung Os des Sensors zur Erfassung dieses Messpunkts dargestellt. Weiter dargestellt ist der Ist-Messpunkt MPf, der erfasst wird, wenn der Sensor durch die Koordinatenmesseinrichtung 3 zur Erfassung des Soll-Messpunkts MPs angesteuert wird. Ersichtlich ist, dass ein Abstand A zwischen dem Ist-Messpunkt MPf und dem Soll-Messpunkt MPs vorhanden ist. Dieser resultiert aus der Abweichung der Form des realen Messobjekts 2 von der Form des idealen Messobjekts 2. In Fig. 4a ist dargestellt, dass dieser Abstand A aufgrund der eingestellten Orientierung des Sensors entlang einer Abstandserfassungsrichtung erfasst wird, die senkrecht zur Fläche F orientiert ist.

Fig. 4b zeigt eine weitere schematische Darstellung des idealen Messobjekts 2 sowie des realen Messobjekts 2`. Dargestellt ist, dass der in Fig. 3a dargestellte Messpunkt MPi der idealen Messbahn um den Abstand A entlang der Abstandserfassungsrichtung verschoben wurde, wodurch eine Position eines angepassten Messpunkts MPa festgelegt wird, insbesondere in einem Koordinatensystem des Messobjekts 2. Weiter dargestellt ist, dass die Orientierung Oa des Sensors zur Erfassung dieses angepassten Messpunkts MPa gleich der Orientierung Oi zur Erfassung des Messpunkts MPi der idealen Messbahn eingestellt wird. Wird die Kante, entlang derer der Messpunkt MPi der idealen Messbahn angeordnet ist, als Schnitt- bzw. Kontaktlinie von zwei Flächen gebildet und liegt die Führungsbahn in einer dieser Flächen, so kann z.B. die Orientierung des Sensors zur Erfassung der Messpunkte der angepassten Messbahn parallel zu einem Normalenvektor der verbleibenden Fläche im angepassten Messpunkt eingestellt werden.

Wird ein Sensor einer Koordinatenmesseinrichtung, z.B. der in Fig. 1 dargestellten Koordinatenmesseinrichtung 3, derart positioniert, dass der angepasste Messpunkt MPa der angepassten Messbahn durch den Sensor erfasst wird, so ist durch die erläuterte Anpassung in vorteilhafter Weise erreicht, dass die Zuverlässigkeit der Erzeugung eines Messwerts, der eine Raumposition eines Oberflächenpunkts des realen Messobjekts 2` repräsentiert, durch den Sensor erhöht wird. Auch kann die Wahrscheinlichkeit erhöht werden, dass der entsprechend erzeugte Messwert tatsächlich eine Position eines gewünschten Raumpunkts des Messobjekts 2, in diesem Ausführungsbeispiel einen Kantenpunkt, repräsentiert.

Insbesondere kann die Wahrscheinlichkeit verringert werden, dass der entsprechend positionierte Sensor keinen Kontakt mit dem realen Messobjekt 2` hat. Hat der entsprechend positionierte Sensor keinen Kontakt mit dem realen Messobjekt 2`, so kann in vorteilhafter Weise durch die Anpassung erreicht werden, dass die Distanz zwischen dem entsprechend positionierten Sensor und einem Oberflächenpunkt des realen Messobjekts 2' geringer ist als ohne Anpassung. Dies wiederum erleichtert und beschleunigt eine entsprechende, z.B. automatisierte, Kontaktfindung durch einen Sensor, wenn dieser entsprechend positioniert ist. Auch die Einstellung verschiedener Orientierungen kann zur Reduktion der Wahrscheinlichkeit beitragen, dass der entsprechend positionierte Sensor keinen Kontakt mit dem realen Messobjekt 2` hat bzw. die erläuterte Distanz in einem solchen Szenario verringern, wobei auch die Wahrscheinlichkeit erhöht werden kann, dass der entsprechend erzeugte Messwert tatsächlich eine Position eines gewünschten Raumpunkts des Messobjekts 2, in diesem Ausführungsbeispiel einen Kantenpunkt, repräsentiert.

In dem in Fig. 4b dargestellten Ausführungsbeispiel wird sich ein Sensor dann an das reale Messobjekt 2` von rechts annähern und dieses im Bereich der Kante kontaktieren und einen Messwert erzeugen. Es ist ersichtlich, dass der derart erzeugte Messwert eine genauere Position der Kante repräsentiert als ein Messwert, der erzeugt wird, wenn der Sensor zum Erfassen des Messpunkts MPi der idealen Messbahn angesteuert wird.

### Bezugszeichenliste

- 1: Vorrichtung
- 2: Messobjekt, ideales Messobjekt
- 2`: reales Messobjekt
- 3: Koordinatenmesseinrichtung
- 4: Steuer- und Auswerteeinrichtung
- 5: Eingabeeinrichtung
- 6: Anzeigeeinrichtung
- 7: Sensor
- F: Fläche
- BS1: erster Bestimmungsschritt
- BS2: zweiter Bestimmungsschritt
- ES: Erfassungsschritt
- BS3: dritter Bestimmungsschritt
- BS4: vierter Bestimmungsschritt
- MPi: Messpunkte der idealen Messbahn
- MPs: Soll-Messpunkte der Führungsbahn
- MPf: Ist-Messpunkt der Führungsbahn
- MPa: Messpunkt der angepassten Messbahn
- Oi: Orientierung des Sensors zur Erfassung des Messpunkts der idealen Messbahn
- Os: Orientierung des Sensors zur Erfassung von Soll-Messpunkten der Führungsbahn
- Oa: Orientierung des Sensors zur Erfassung von Messpunkten der angepassten Messbahn
- D: Abstand
- A: Abstand

## Patentansprüche

1. Verfahren zur Bestimmung von Messpunkten (MPa) einer angepassten Messbahn zur Vermessung eines Messobjekts (2, 2') durch eine Koordinatenmesseinrichtung (3), umfassend die Schritte
- Bestimmen von Messpunkten (MPi) einer idealen Messbahn,
- Bestimmen von Soll-Messpunkten (MPs) mindestens einer Führungsbahn, die von der idealen Messbahn verschieden ist,
- Erfassen von Ist-Messpunkten (MPf) entlang der mindestens einen Führungsbahn durch die Koordinatenmesseinrichtung (3) oder eine weitere Koordinatenmesseinrichtung,
- Bestimmen der Abweichungen (A) zwischen den Soll-Messpunkten (MPs) und den Ist-Messpunkten (MPf) der mindestens einen Führungsbahn,
- Bestimmen der Messpunkte (MPa) der angepassten Messbahn durch Verändern der Messpunkte (MPi) der idealen Messbahn in Abhängigkeit der Abweichungen (A),
**dadurch gekennzeichnet, dass**
die Führungsbahn parallel zur idealen Messbahn verläuft.

2. Verfahren nach Anspruch 1, **dadurch gekennzeichnet, dass** die Messbahn entlang einer Kante des Messobjekts (2) verläuft.

3. Verfahren nach einem der vorangegangenen Ansprüche, **dadurch gekennzeichnet, dass** die Führungsbahn entlang einer Fläche (F) des Messobjekts (2) verläuft.

4. Verfahren nach Anspruch 3, **dadurch gekennzeichnet, dass** die Messbahn entlang einer Kante des Messobjekts verläuft, wobei die Fläche (F) eine durch die Kante begrenzte Fläche ist.

5. Verfahren nach einem der vorangegangenen Ansprüche, **dadurch gekennzeichnet, dass** ein Maximalwert der Abstände zwischen einem Soll-Messpunkt (MPs) der Führungsbahn und dem jeweils nächstliegenden Messpunkt (MPi) der idealen Messbahn kleiner als ein vorbestimmter Abstand ist.

6. Verfahren nach einem der vorangegangenen Ansprüche, **dadurch gekennzeichnet, dass** eine Orientierung (Os) des Sensors zur Erfassung der Ist-Messpunkte (MPf) der Führungsbahn von einer Orientierung (Oi) des Sensors zur Erfassung der Messpunkte (MPi) der idealen Messbahn verschieden.

7. Verfahren nach Anspruch 6, **dadurch gekennzeichnet, dass** die Orientierungen (Oi, Os) um 90° verschieden sind.

8. Verfahren nach einem der vorangegangenen Ansprüche, **dadurch gekennzeichnet, dass** die Messpunkte (MPi) der idealen Messbahn und die Soll-Messpunkte (MPs) der Führungsbahn modellbasiert bestimmt werden.

9. Verfahren nach einem der vorangegangenen Ansprüche, **dadurch gekennzeichnet, dass** die angepasste Messbahn vor der Bestimmung der angepassten Messbahn für ein neues Messobjekt (2) auf die ideale Messbahn oder eine weitere ideale Messbahn zurückgesetzt wird.

10. Programm, welches, wenn es auf oder durch einen Computer oder eine Auswerteeinrichtung ausgeführt wird, eine Vorrichtung nach Anspruch 11 veranlasst, alle Schritte eines Verfahrens zur Bestimmung von Messpunkten (MPa) einer angepassten Messbahn gemäß einem der Ansprüche 1 bis 9 durchzuführen.

11. Vorrichtung zur Bestimmung von Messpunkten (MPa) einer angepassten Messbahn zur Vermessung eines Messobjekts (2, 2') durch eine Koordinatenmesseinrichtung (3), wobei die Vorrichtung (1) die Koordinatenmesseinrichtung (3) oder eine weitere Koordinatenmesseinrichtung sowie mindestens eine Steuer- und Auswerteeinrichtung (4) umfasst, wobei Vorrichtung (1) konfiguriert ist, ein Verfahren durchzuführen, welches folgende Schritte umfasst:
- Bestimmen von Messpunkten (MPi) einer idealen Messbahn,
- Bestimmen von Soll-Messpunkten (MPs) mindestens einer Führungsbahn, die von der idealen Messbahn verschieden ist,
- Erfassen von Ist-Messpunkten (MPf) entlang der mindestens einen Führungsbahn durch die Koordinatenmesseinrichtung (3) oder eine weitere Koordinatenmesseinrichtung,
- Bestimmen der Abweichungen (A) zwischen den Soll-Messpunkten (MPs) und den Ist-Messpunkten (MPf) der mindestens einen Führungsbahn,
- Bestimmen der Messpunkte (MPa) der angepassten Messbahn durch Verändern der Messpunkte (MPi) der idealen Messbahn in Abhängigkeit der Abweichungen (A),
**dadurch gekennzeichnet, dass**
die Führungsbahn parallel zur idealen Messbahn verläuft.

## Claims

1. Method for determining measurement points (MPa) of an adapted measurement path for measuring a measurement object (2, 2') using a coordinate measuring device (3), comprising the steps of
- determining measurement points (MPi) of an ideal measurement path,
- determining target measurement points (MPs) of at least one guide path, which differs from the ideal measurement path,
- capturing actual measurement points (MPf) along the at least one guide path using the coordinate measuring device (3) or a further coordinate measuring device,
- determining the deviations (A) between the target measurement points (MPs) and the actual measurement points (MPf) of the at least one guide path,
- determining the measurement points (MPa) of the adapted measurement path by changing the measurement points (MPi) of the ideal measurement path in dependence on the deviations (A),
**characterized in that**
the guide path extends parallel to the ideal measurement path.

2. Method according to Claim 1, **characterized in that** the measurement path extends along an edge of the measurement object (2).

3. Method according to one of the preceding claims, **characterized in that** the guide path extends along an area (F) of the measurement object (2).

4. Method according to Claim 3, **characterized in that** the measurement path extends along an edge of the measurement object, wherein the area (F) is an area delimited by the edge.

5. Method according to one of the preceding claims, **characterized in that** a maximum value of the distances between a target measurement point (MPs) of the guide path and the respectively closest measurement point (MPi) of the ideal measurement path is smaller than a predetermined distance.

6. Method according to one of the preceding claims, **characterized in that** an orientation (Os) of the sensor for capturing the actual measurement points (MPf) of the guide path differs from an orientation (Oi) of the sensor for capturing the measurement points (MPi) of the ideal measurement path.

7. Method according to Claim 6, **characterized in that** the orientations (Oi, Os) differ by 90°.

8. Method according to one of the preceding claims, **characterized in that** the measurement points (MPi) of the ideal measurement path and the target measurement points (MPs) of the guide path are determined based on models.

9. Method according to one of the preceding claims, **characterized in that** the adapted measurement path is reset to the ideal measurement path or to a further ideal measurement path before the adapted measurement path for a new measurement object (2) is determined.

10. Program which, when executed on or by a computer or an evaluation device, causes an apparatus according to Claim 11 to carry out all of the steps of a method for determining measurement points (MPa) of an adapted measurement path according to one of Claims 1 to 9.

11. Apparatus for determining measurement points (MPa) of an adapted measurement path for measuring a measurement object (2, 2') using a coordinate measuring device (3), wherein the apparatus (1) comprises the coordinate measuring device (3) or a further coordinate measuring device, and at least one control and evaluation device (4), wherein the apparatus (1) is configured for carrying out a method comprising the following steps:
- determining measurement points (MPi) of an ideal measurement path,
- determining target measurement points (MPs) of at least one guide path, which differs from the ideal measurement path,
- capturing actual measurement points (MPf) along the at least one guide path using the coordinate measuring device (3) or a further coordinate measuring device,
- determining the deviations (A) between the target measurement points (MPs) and the actual measurement points (MPf) of the at least one guide path,
- determining the measurement points (MPa) of the adapted measurement path by changing the measurement points (MPi) of the ideal measurement path in dependence on the deviations (A),
**characterized in that**
the guide path extends parallel to the ideal measurement path.

## Revendications

1. Procédé de détermination de points de mesure (MPa) d'une trajectoire de mesure adaptée afin de mesurer un objet de mesure (2, 2') par le biais d'un module de mesure de coordonnées (3), ledit procédé comprenant les étapes suivantes
- déterminer des points de mesure (MPi) d'une trajectoire de mesure idéale,
- déterminer des points de mesure cibles (MPs) d'au moins une trajectoire de guidage qui diffère de la trajectoire de mesure idéale,
- acquérir des points de mesure réels (MPf) le long de l'au moins une trajectoire de guidage par le biais du module de mesure de coordonnées (3) ou d'un autre module de mesure de coordonnées,
- déterminer les écarts (A) entre les points de mesure cibles (MPs) et les points de mesure réels (MPf) de l'au moins une trajectoire de guidage,
- déterminer les points de mesure (MPa) de la trajectoire de mesure adaptée par modification des points de mesure (MPi) de la trajectoire de mesure idéale en fonction des écarts (A),
**caractérisé en ce que**
la trajectoire de guidage est parallèle à la trajectoire de mesure idéale.

2. Procédé selon la revendication 1, **caractérisé en ce que** la trajectoire de mesure s'étend le long d'un bord de l'objet de mesure (2).

3. Procédé selon l'une des revendications précédentes, **caractérisé en ce que** la trajectoire de guidage s'étend le long d'une surface (F) de l'objet de mesure (2).

4. Procédé selon la revendication 3, **caractérisé en ce que** la trajectoire de mesure s'étend le long d'un bord de l'objet de mesure, la surface (F) étant une surface délimitée par le bord.

5. Procédé selon l'une des revendications précédentes, **caractérisé en ce qu'**une valeur maximale des distances entre un point de mesure cible (MPs) de la trajectoire de guidage et le point de mesure le plus proche (MPi) de la trajectoire de mesure idéale est inférieure à un distance prédéterminée.

6. Procédé selon l'une des revendications précédentes, **caractérisé en ce qu'**une orientation (Os) du capteur d'acquisition des points de mesure réels (MPf) de la trajectoire de guidage est différente d'une orientation (Oi) du capteur d'acquisition des points de mesure (MPi) de la trajectoire de mesure idéale.

7. Procédé selon la revendication 6, **caractérisé en ce que** les orientations (Oi, Os) diffèrent de 90°.

8. Procédé selon l'une des revendications précédentes, **caractérisé en ce que** les points de mesure (MPi) de la trajectoire de mesure idéale et les points de mesure cibles (MPs) de la trajectoire de guidage sont déterminés à partir d'un modèle.

9. Procédé selon l'une des revendications précédentes, **caractérisé en ce que** la trajectoire de mesure adaptée est ramenée à la trajectoire de mesure idéale ou une autre trajectoire de mesure idéale avant de déterminer la trajectoire de mesure adaptée pour un nouvel objet de mesure (2).

10. Programme qui, lorsqu'il est exécuté sur ou par un ordinateur ou un module d'évaluation, ordonne à un dispositif selon la revendication 11 d'exécuter toutes les étapes d'un procédé de détermination de points de mesure (MPa) d'une trajectoire de mesure adaptée selon l'une des revendications 1 à 9.

11. Dispositif de détermination de points de mesure (MPa) d'une trajectoire de mesure adaptée afin de mesurer un objet de mesure (2, 2') par le biais d'un module de mesure de coordonnées (3), le dispositif (1) comprenant le module de mesure de coordonnées (3) ou un autre module de mesure de coordonnées et au moins un module de commande et d'évaluation (4), le dispositif (1) étant configuré pour mettre en œuvre un procédé qui comprend les étapes suivantes :
- déterminer des points de mesure (MPi) d'une trajectoire de mesure idéale,
- déterminer des points de mesure cibles (MP) d'au moins une trajectoire de guidage qui diffère de la trajectoire de mesure idéale,
- acquérir des points de mesure réels (MPf) le long de l'au moins une trajectoire de guidage par le biais du module de mesure de coordonnées (3) ou d'un autre module de mesure de coordonnées,
- déterminer les écarts (A) entre les points de mesure cibles (MPs) et les points de mesure réels (MPf) de l'au moins une trajectoire de guidage,
- déterminer les points de mesure (MPa) de la trajectoire de mesure adaptée par modification des points de mesure (MPi) de la trajectoire de mesure idéale en fonction des écarts (A),
**caractérisé en ce que**
la trajectoire de guidage est parallèle à la trajectoire de mesure idéale.
